# EUROPEAN PATENT SPECIFICATION

(11) **EP 2 869 229 B1**
(45) Date of publication and mention of the grant of the patent: **06.12.2017**
(21) Application number: 14190765.9
(22) Date of filing: 28.10.2014
(51) Int. Cl.: G06F 21/57, G06F 9/445, H04L 29/08

(54) **Method, device and equipment for installing an application**
Verfahren, Gerät und Anlagen für die Installation einer Anwendung
Méthode, appareil et équipement pour installer une application

(30) Priority: 01.11.2013 CN 201310535264
(43) Date of publication of application: 06.05.2015
(73) Proprietor: Xiaomi Inc., Beijing (CN)
(72) Inventor: Yang, Liang, Haidian District Beijing (CN); Wang, Wenlin, Haidian District Beijing (CN); Zheng, Xingping, Haidian District Beijing (CN)
(74) Representative: Hanna Moore + Curley

(56) References cited:
- US-A1- 2010 312 966
- US-A1- 2011 010 699

## Description

### TECHNICAL FIELD

The disclosure relates to the field of installing applications, and more particularly to a method, device and equipment for installing an application.

### BACKGROUND

With the present era of mobile multimedia, by means of rich applications, mobile phones have developed gradually from simple tools for phone calls to intelligent ones. At the core of a smart phone, the operating system has become the most competitive part of the smart phone. Operating systems make a smart phone increasingly become a microcomputer. A user may install applications on the smart phone provided by third-party service providers such as applications and games, so as to continually increase the functions of the mobile phone by installing such applications.

In order to share information better, some companies offer software development tools that allow anyone to develop applications based on a certain operating system, this brings convenience to the majority of users for meeting users' diverse demands for applications, but it also leads to viruses or trojans and other malicious applications developed by some people using those tools on the operating system.

Deceptive attacks of malicious applications constantly emerge with new forms, which are hard to be detected and eliminated. When a user installs an application that has been downloaded, one very dangerous deceptive means of attack is, by making use of behaviors that users of smart phones often directly download applications for installation via routes such as internet, to intercept the user's installation operation and then give misleading prompts that guide the user to install applications recommended by the malicious applications, or directly install the applications that the malicious applications want to install, or prevent the user from installing certain applications (such as security applications).

This kind of deceptive attack is very difficult to be identified by users due to their extremely hidden characteristics. Meanwhile, because this kind of deceptive attack controls the installation of applications, it causes significant harm. One approach against such an attack is that when the user chooses to install an application that has been downloaded on a mobile phone, the operating system may display a selection dialog box, to prompt the user to select an application in this dialog box so as to install the application. However, because the malicious application is often renamed to pretend as a security application, those ordinary users who have no experience or do not carefully distinguish are vulnerable to be cheated by the malicious application and it is easy to choose the malicious application, thereby being attacked and harmed by the malicious application. The present state of the art is represented by US 2010/0312966 A1 and US 2011/0010699 A1.

### SUMMARY

The problem to be solved by the present disclosure is to provide a method for installing application, for preventing malicious applications from intercepting a user to install the applications that have been downloaded, so as to improve the security of operating systems.

Correspondingly, the present invention provides a device for installing application as well as an equipment to ensure the realization and application of the above methods, in accordance with claims which follow.

According to a first aspect of the embodiments of the present disclosure, a method is provided for installing application, comprising:
when determining that a current process request is an installation request of a downloaded application, determining an installation program object carried by an operating system itself as a process program object in response to the installation request; and
starting up the installation program object carried by the operating system itself to install the downloaded application corresponding to the installation request.

Optionally, the step of determining the installation program object carried by the operating system itself is the process program object in response to the installation request includes:
specifying a component name to a component property of the installation request, wherein the component name is a mark of the installation program object carried by the operating system itself;
obtaining a process program list in the operating system corresponding to the installation request; and
looking up in the process program list the mark of the installation program object carried by the operating system itself, and obtaining the corresponding installation program object carried by the operating system itself as a process program object in response to the installation request.

Optionally, the step of determining the installation program object carried by an operating system itself is the process program object in response to the installation request includes:
obtaining a process program list in the operating system corresponding to the installation request, the process program list consists of one installation program object carried by the operating system itself; and
obtaining the installation program object carried by the operating system itself as a process program object in response to the installation request.

Optionally, the step of determining the current process request as the installation request of the downloaded application includes:
obtaining property information of the current process request, wherein the property information includes an action property and a type property; and
if the action property and the type property are respectively consistent with an action property and a type property preset for the installation request of the downloaded application, judging the current process request as the installation request of the downloaded application.

Optionally, a chooseBestActivity method is applied to obtain the property information of the current process request.

According to a second aspect of the embodiments of the present disclosure, it provides a device for installing application, comprising:
an object determining module configured to determine an installation program object carried by an operating system itself as a process program object in response to the installation request, when determining that a current process request is an installation request of a downloaded application; and
an installing module configured to start up the installation program object carried by the operating system itself to install the downloaded application corresponding to the installation request.

Optionally, the object determining module includes:
a request determining sub-module configured to determine a current process request as an installation request of a downloaded application;
a mark adding sub-module configured to specify a component name to a component property of the installation request, wherein the component name is a mark of the installation program object carried by the operating system itself;
a first list obtaining sub-module configured to obtain a process program list in the operating system corresponding to the installation request; and
a looking up sub-module configured to look up in the process program list the mark of the installation program object carried by the operating system itself, and obtain the corresponding installation program object carried by the operating system itself as a process program object in response to the installation request.

Optionally, the object determining module includes:
a request determining sub-module configured to determine a current process request as an installation request of a downloaded application;
a second list obtaining sub-module configured to obtain a process program list in the operating system corresponding to the installation request, wherein the process program list consists of one installation program object carried by the operating system itself; and
an object obtaining sub-module configured to obtain the installation program object carried by the operating system itself as a process program object in response to the installation request.

Optionally, the request determining sub-module includes:
a property information obtaining sub-module configured to obtain property information of the current process request, wherein the property information includes an action property and a type property;
a judging sub-module configured to judge the current process request as the installation request of the downloaded application, when the action property and the type property are respectively consistent with an action property and a type property preset for the installation request of the downloaded application.

Optionally, a chooseBestActivity method is applied to obtain the property information of the current process request.

According to a third aspect of the embodiments of the present disclosure, it provides an equipment, comprising:
one or more processors;
a memory; and
one or more modules stored in the storage and configured to be executed by the one or more processors, wherein the one or more modules have following functions:
when determining that a current process request is an installation request of a downloaded application, determining the installation program object carried by an operating system itself as a process program object in response to the installation request; and
starting up the installation program object carried by the operating system itself to install the downloaded application corresponding to the installation request.

The technology solutions provided by the embodiments of the present disclosure may include beneficial effects as below.

In the present disclosure, when determining that a current process request is an installation request of a downloaded application, by directing the installation request directly to the installation program object carried by the operating system itself, or ignoring registrations of other third-party processing objects in the process list and mandatory selecting the installation program object carried by the operating system itself, the installation program object carried by the operating system itself is used to directly install an application corresponding to the application installation request, so that the malicious application has no opportunity to participate in the process of application installation, thus improving the security of the operating systems.

It is to be understood that both the foregoing general description and the following detailed description are exemplary only and are not restrictive of the present disclosure.

### BRIEF DESCRIPTION OF THE DRAWINGS

The accompanying drawings here are incorporated into and as a part of the specification to illustrate the embodiments in compliance with the present application, and to explain the principles of the present application together with the specification.
Fig. 1 is a flow chart showing a method for installing application according to an exemplary embodiment;
Fig. 2 is a flow chart showing a method for installing application according to an exemplary embodiment;
Fig. 3 is a flow chart showing a method for installing application according to an exemplary embodiment;
Fig. 4 is a structural block diagram showing a device for installing application according to an exemplary embodiment;
Fig. 5 is a structural block diagram showing an object determining module according to an exemplary embodiment;
Fig. 6 is a structural block diagram showing an object determining module according to an exemplary embodiment;
Fig. 7 is a structural diagram showing a terminal equipment according to an exemplary embodiment.

### DESCRIPTION OF THE EMBODIMENTS

Detailed description of the exemplary embodiments will be made herein, with examples thereof to be shown in drawings. In the following description, when the following description refers to the drawings, unless expressed otherwise, the same number in different drawings refers to the same or similar elements. The embodiments described in the exemplary embodiments as below do not represent all embodiments that are consistent with the present invention. On the contrary, they are only examples of the devices and the methods that are consistent with some of the aspects of the present invention as recited in the claims.

One core idea of the present disclosure is that, when determining that a current process request is an installation request of a downloaded application, by directing the installation request directly to the installation program object carried by the operating system itself, or ignoring registrations of other third-party processing objects in the process list and mandatory selecting the installation program object carried by the operating system itself, the installation program object carried by the operating system itself is used to directly install an application corresponding to the application installation request, so that the malicious application has no opportunity to participate in the process of application installation, thus improving the security of the operating systems.

### The first embodiment

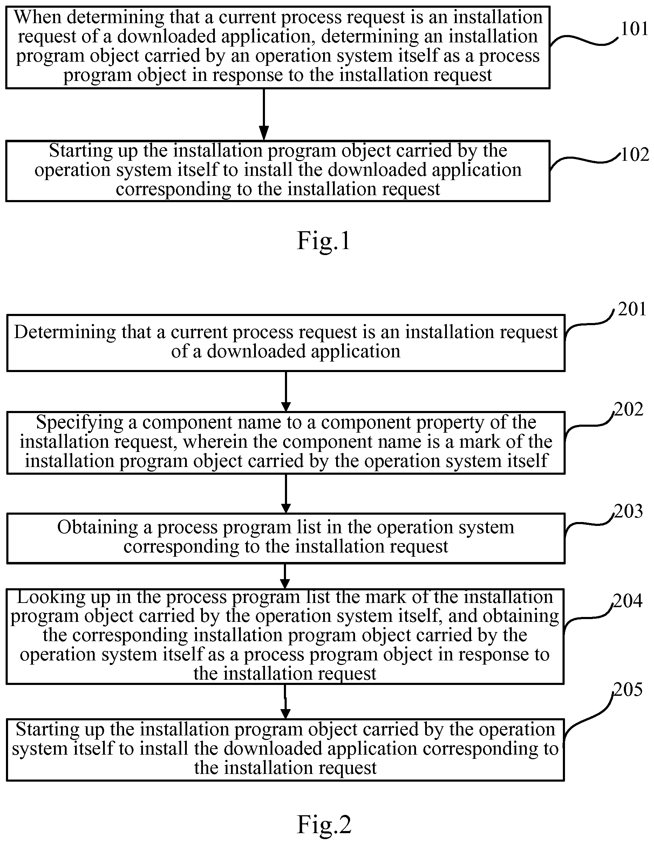

Referring to Fig. 1, which is a flow chart showing a method for installing application according to an exemplary embodiment of the present disclosure, the present embodiment may include steps as below.

In step 101, when determining that a current process request is an installation request of a downloaded application, an installation program object carried by an operating system itself is determined as a process program object in response to the installation request.

In step 102, the installation program object carried by the operating system itself is started up to install the downloaded application corresponding to the installation request.

In the present embodiment, when determining that a current process request is an installation request of a downloaded application, by mandatory selecting the installation program object carried by the operating system itself to install the application corresponding to the current request, the malicious application has no opportunity to participate in the process of application installation, thus improving the security of the operating systems.

### The second embodiment

Referring to Fig. 2, which is a flow chart showing a method for installing application according to an exemplary embodiment of the present disclosure. In the present embodiment, taking Android operating system for example, but the present embodiment is not limited to the Android operating system, and may also applicable to other operating systems. The present embodiment may include steps as below.

In step 201, a current process request is determined as an installation request of a downloaded application.

There may be many applications existing in an Android operating system, each may send various requests in an interactive process with the operating system or other applications such as an interface starting up request, a networking request and the like. The present embodiment firstly identifies the installation request of the downloaded application from various requests, and in one of the present embodiments, a step of determining the current process request as the installation request of the downloaded application may include sub-steps as below:

In sub-step S11, property information of the current process request is obtained, wherein the property information includes an action property and a type property.

In implementation, when an application sends a request, the request includes the application's Intent. The Android operating system selects proper components according to the content of the Intent to finish the request. Actually, the Intent is a run-time binding mechanism, which can connect two different components in an operation process of the application. The Intent object abstractively describes the operation to be executed, the basic content described may be divided into six portions including Component name, Action, Data, Category, Extra and Flag, wherein:

Component name is a component property, which is the name of an Intent target component. Component name is a ComponentName object. This kind of object name is a combination of a category name of the target component and a package name of the application where the target component is located. In the component, the package name is not necessary to be completely matched with the package name in a manifest document. Component name is an option. If an Intent message indicates the name of the target component, this is an explicit message, so that the Intent may transfer it to the indicated component; and if the name of the target Component is not indicated, Android may select a proper target component by comparing other information in the Intent with a registered IntentFilter.

Action depicts a character string of a name of Action triggered by the Intent. Theoretically Action may be any character string, and Action character strings related to the applications of Android operating system are defined in Intent category in a form of static state character string constant.

Data depicts data URI and data category Type to be operated by the Intent, some of the Actions need to process corresponding data.

Category is the additional depiction information for the requested component.

In the present embodiment, the property information of the current process request is the depictive content of the Intent, and the current process request may be interpreted by using chooseBestActivity method, so that the property information of the request is obtained. ChooseBestActivity method is a method in a category of package manager service (com.android.server.pm.Package Manager Service, PMS for short). PMS calls the method to select the best Activity object matched with the Intent. In the Android operating system, after downloading the application, the downloaded installation package is stored in the Package Manager Service, wherein, PMS is responsible for installing, uninstalling, and managing various applications and the like. This service is started up by the system server at boot time. At boot time, the PMS interprets the data related to the previously stored installation packages. The newly installed apk in the operation process of Android operating system may also be stored in the related variable of PMS, or may be written into related documents to be permanently stored.

In sub-step S12, if the action property and the type property are respectively consistent with the action property and the type property preset for the installation request of the downloaded application, the current process request is judged as the installation request of the downloaded application.

In the present embodiment, if the Action property (Action) and the category property (Type) of the current process request have values consistent with that of the preset action property and type property of the installation request for the installation package, the current received request is judged as the installation request of the downloaded application.

In step 202, a component name is specified to a component property of the installation request, wherein the component name is a mark of the installation program object carried by the operating system itself.

In the present embodiment, when identifying the current process request as the installation request of the downloaded application, the component property (Component) of the installation request is specified with a Component name of the target component. The Component name is the mark of the installation program object carried by the operating system itself, which is to set ComponentName in the Intent object as the mark of the installation program object carried by the operating system itself, so that the process program object indicated by the installation request becomes the installation program object carried by the operating system itself.

In implementation, the installation program object carried by the operating system itself is a default installation program of the operating system. The installation program is one of the application programs, used to assist the user in installing other applications or driving programs.

In step 203, a process program list in the operating system corresponding to the installation request is obtained.

In implementation, Android operating system stores a process program listthat stores one or more process program objects having installation ability. The process program object may either be the installation program object carried by the operating system itself, and/or the third-party installation program object. Actually, when a process program object having installation ability submits an application for registration to the operating system, if the operating system determines that the process program object has installation ability according to the application for registration, it may accept the application for registration of the process program object and add the process program object into the process program list.

In step 204, the mark of the installation program object carried by the operating system itself is looked up in the process program list, and the installation program object carried by the operating system itself is obtained as a process program object in response to the installation request.

In the present embodiment, because ComponentName in the Intent object of the installation request of the downloaded application is the mark of the installation program object carried by the operating system itself, namely, the target component name is indicated in the Intent message, in the process of matching with the one or more process program object in the process program list, the Intent may be directly matched to the indicated component (the indicated component in the present embodiment refers to the installation program object carried by the operating system itself), and the Intent is directly transferred to the indicated component.

In step 205, the installation program object carried by the operating system itself is started up to install the downloaded application corresponding to the request.

When the installation program object carried by the operating system itself, which is matched to the Intent of the installation request sent from the downloaded application, is a target component, the installation program object carried by the operating system itself obtains the installation package corresponding to the installation request from the PMS to install the application.

In the present embodiment, by directly starting up the installation program object carried by the operating system itself to install the application indicated by the corresponding installation request, other than starting up a selection dialog box including a plurality of process programs for the user to select, a purpose of shielding malicious applications is achieved, so as to prevent the harm caused by the user's wrong choice of the process program object, and achieve the purpose of protecting users.

### The third embodiment

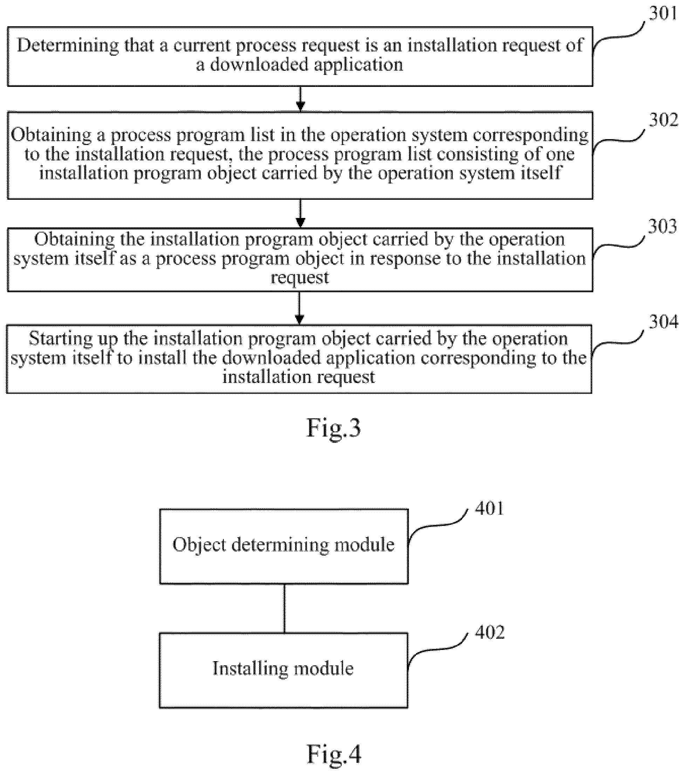

Referring to Fig. 3, which is a flow chart showing a method for installing application according to an exemplary embodiment of the present disclosure. The present embodiment takes the Android operating system for example, and it may include steps as below.

In step 301, a current process request is determined as an installation request of a downloaded application.

In one of the present embodiments, step 301 may include sub-steps as below:

In sub-step S21, property information of the current process request is obtained, wherein the property information includes an action property and a type property; and

In sub-step S22, if the action property and the type property are respectively consistent with the action property and the type property preset for the installation request of the downloaded application, the currently received request is judged as the installation request of the downloaded application.

In step 302, a process program list in the operating system corresponding to the installation request is obtained, wherein the process program list consists of one installation program object carried by the operating system itself.

In implementation, the Android operating system stores a process program list that stores one or more process program objects having installation ability. Theoretically the process program object may be either the installation program object carried by the operating system itself, or may be the third-party installation program object. However, in the present embodiment, the Android operating system, when receiving the application for registration of the third-party installation program object, refuses the application, so that it ignores the register of the third-party installation program object, and only accepts the register of the installation program object carried by the operating system itself. Thus the maintained process program list only includes therein the installation program object carried by the operating system itself. In every operating system, the installation program object carried by the operating system itself is only one, so the system is forced to select the installation program object carried by the operating system itself.

In step 303, the installation program object carried by the operating system itself is obtained as a process program object in response to the installation request.

In step 304, the installation program object carried by the operating system itself is started up to install the downloaded application corresponding to the installation request.

In the present embodiment, when receiving the request for registration, except the request for registration from the installation program object of the operating system, all of other requests for registration from the third-party process program object are ignored, so that the process program list therein only includes one installation program object carried by the operating system itself, thereby achieving purposes of shielding the third-party process program objects, and preventing the third-party process program objects or malicious applications from intercepting the users' installation of the downloaded applications.

### The fourth embodiment

Based on the same disclosed concept, referring to Fig. 4, which is a structural block diagram showing a device for installing application according to an exemplary embodiment, the device may include modules as below:
an object determining module 401 configured to determine the installation program object carried by an operating system itself as a process program object in response to the installation request, when determining that a current process request is an installation request of a downloaded application; and
an installing module 402 configured to start up the installation program object carried by the operating system itself to install the downloaded application corresponding to the installation request.

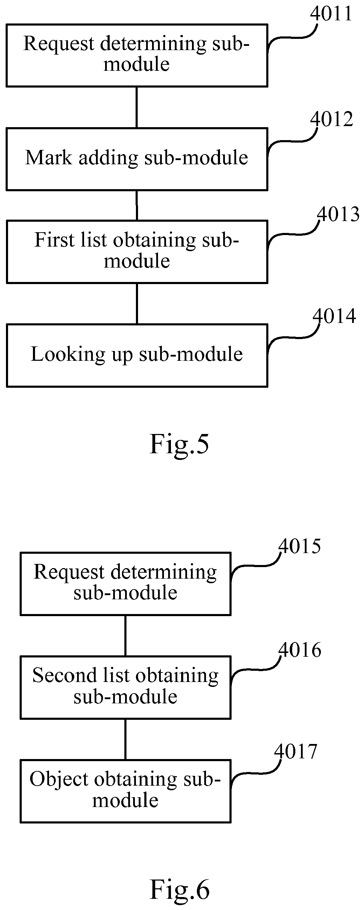

Referring to Fig. 5, which is a structural block diagram showing an object determining module according to an exemplary embodiment of the present disclosure, the object determining module 401 may include sub-modules as below:
a request determining sub-module 4011 configured to determine a current process request as an installation request of a downloaded application;
a mark adding sub-module 4012 configured to specify a component name to a component property of the installation request, wherein the component name is a mark of the installation program object carried by the operating system itself;
a first list obtaining sub-module 4013 configured to obtain a process program list in the operating system corresponding to the installation request; and
a looking up sub-module 4014 configured to look up in the process program list the mark of the installation program object carried by the operating system itself, and obtain the corresponding installation program object carried by the operating system itself as a process program object in response to the installation request.

Referring to Fig. 6, which is a structural block diagram showing an object determining module according to an exemplary embodiment, the object determining module 401 may include sub-module as below:
a request determining sub-module 4015 configured to determine a current process request as an installation request of a downloaded application;
a second list obtaining sub-module 4016 configured to obtain a process program list in the operating system corresponding to the installation request, wherein the process program list consists of one installation program object carried by the operating system itself; and
an object obtaining sub-module 4017 configured to obtain the installation program object carried by the operating system itself as a process program object in response to the installation request.

In one of the present embodiments, the request determining sub-module may include sub-modules as below:
a property information obtaining sub-module configured to obtain a property information of the current process request, wherein the property information includes an action property and a type property.

In one of the present embodiments, a chooseBestActivity method may be applied to obtain the property information of the current process request.

The judging sub-module is configured to judge the current process request as the installation request of the downloaded application, when the action property and the type property are respectively consistent with the action property and the type property preset for the installation request of the downloaded application.

### The fifth embodiment

The present embodiment also provides a non-volatile readable storage medium, the storage medium storing one or more programs therein. When the one or more programs are applied to the equipment, they may make the equipment execute orders (instructions) of respective steps:
when determining that a current process request is an installation request of a downloaded application, determining the installation program object carried by an operating system itself is a process program object in response to the installation request; and
starting up the installation program object carried by the operating system itself to install the downloaded application corresponding to the installation request.

Optionally, the step of determining the installation program object carried by an operating system itself as a process program object in response to the installation request includes:
specifying a component name to a component property of the installation request, wherein the component name is a mark of the installation program object carried by the operating system itself;
obtaining a process program list in the operating system corresponding to the installation request; and
looking up in the process program list the mark of the installation program object carried by the operating system itself, and obtaining the corresponding installation program object carried by the operating system itself as a process program object in response to the installation request.

Optionally, the step of determining the installation program object carried by the operating system itself as the process program object in response to the installation request includes:
obtaining a process program list in the operating system corresponding to the installation request, wherein the process program list consists of one installation program object carried by the operating system itself; and
obtaining the installation program object carried by the operating system itself as a process program object in response to the installation request.

Optionally, the step of determining the current process request as the installation request of the downloaded application includes:
obtaining property information of the current process request, wherein the property information includes an action property and a type property; and
if the action property and the type property are respectively consistent with the action property and the type property preset for the installation request of the downloaded application, judging the current process request as the installation request of the downloaded application.

Optionally, a chooseBestActivity method is applied to obtain the property information of the current process request.

### The sixth embodiment

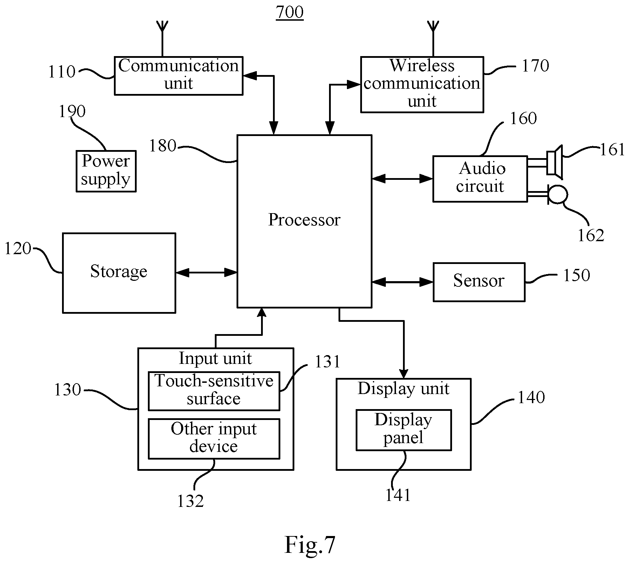

Fig. 7 is a structural diagram showing a terminal equipment according to an exemplary embodiment. Referring to Fig. 7, the terminal equipment may be used to implement the voice control method of the smart terminal provided by the above-described embodiments. The terminal equipment herein may be a mobile phone, a pad, a wearable mobile equipment such as a smart watch or the like.

The terminal equipment 700 may include parts such as a communication unit 110, a memory 120 including one or more computer-readable storage media, an input unit 130, a display unit 140, a sensor 150, an audio circuit 160, a WIFI (Wireless Fidelity) module 170, a processor 180 including one or more processing cores, a power supply 190 and the like. Those skilled in the art may understand that, the structures of the electronic equipment shown in Fig. 7 is not intend to limit the terminal equipment, they may include more or less parts as compared to those shown in the drawings, combinations of some parts, or different arrangements of some parts.

The communication unit 110 may be configured to send and receive signals during sending and receiving of information or a process of calling. Wherein the communication unit 110 may be a network communication equipment such as a RF (Radio Frequency) circuit, a router, a modem or the like. In particular, when the communication unit 110 is a RF circuit, it may receive the downlink information of a base station, then hand it to one or more processors 180 to process. In addition, the communication unit 110 may transmit the related uplink data to the base station. Usually, the RF circuit as the communication unit includes but is not limited to an antenna, at least one amplifier, a tuner, one or more oscillator, a user ID module (SIM) card, a transceiver, a coupler, a LNA (Low Noise Amplifier), a diplexer and the like. In addition, the communication unit 110 may also communicate with network and other equipments through wireless communication. The wireless communication may apply any one of the communication standards or protocols, which include but are not limited to GSM (Global System of Mobile communication), GPRS (General Packet Radio Service), CDMA (Code Division Multiple Access), WCDMA (Wideband Code Division Multiple Access), LTE (Long Term Evolution), E-mail, SMS (Short Messaging Service,) or the like. A memory 120 may be configured to store software programs and modules, the processor 180 executes various function applications and data processing through executing software programs and modules stored in the storage 120. The storage 120 may mainly include a program storage area and a data storage area, wherein the program storage area may store operating systems, application programs required by at least one function (for example, sound playing functions, image playing functions and the like), etc.; the data storage area may store data created according to the applications of the terminal equipment 700 (for example, audio data, phone books and the like), etc. In addition, the storage 120 may include a high-speed random access memory, and may also include a nonvolatile storage such as at least one disk storage, a flash storage, or other volatile solid-state memories. Correspondingly, the storage 120 may also include a storage controller to provide accessing of the processor 180 and the input unit 130 to the storage 120.

The input unit 130 may be configured to receive input digital or character information, and generate signal input for a keyboard, a mouse, an operation lever, an optical or a trackball related to the user setting and function control. Preferably, the input unit 130 may include a touch-sensitive surface 131 and other input devices 132. The touch-sensitive surface 131, also known as a touch screen or a touchpad, may collect the user's touch operation thereon or nearby (for example, the user's operation on or near the touch-sensitive surface 131 by using any suitable object or accessory such as his finger, a touchpen or the like), and drive the corresponding connection devices according to pre-set programs. Alternatively, the touch-sensitive surface 131 may include two portions including a touch detect device and a touch controller. The touch detect device detects the user's touch orientation, and detects the signal caused by the touch operation, sends the signal to the touch controller; the touch controller receives the touch information from the touch detect device, and converts it into contact point coordinates, then sends them to the processor 180, and the touch controller can receive the orders sent by the processor 180 so as to execute them. In addition, the touch-sensitive surface 131 may be implemented by using various types of resistance, capacitance, infrared light, surface acoustic wave and the like. Besides the touch-sensitive surface 131, the input unit 130 may also include other input devices 132. Preferably, the other input devices 132 may include but are not limited to one or more devices such as a physical keyboard, function keys (for example, volume control keys, switch keys and the like), a trackball, a mouse, and an operation lever.

The display unit 140 may be configured to display the information input by the user or the information provided to the user and various user image interfaces of the terminal equipment 700, wherein those user image interfaces may consist of images, texts, icons, videos and arbitrary combinations thereof. The display unit 140 may include a display panel 141. Alternatively, the display panel 141 may be configured by using forms of LCD (Liquid Crystal Display), OLED (Organic Light-Emitting Diode) and the like. Further, the touch-sensitive surface 131 may cover the display panel 141. The touch-sensitive surface 131, when detecting the touch operation thereon or nearby, transmit the touch operation to the processor 180 to determine the type of the touch event, then the processor 180 provide corresponding visual output on the display panel 141 according to the type of the touch event. Although in Fig. 8, the touch-sensitive surface 131 and the display panel 141 may be two separated parts to implement input and input functions, but in some embodiments, the touch-sensitive surface 131 and the display panel 141 maybe integrated to implement the input and the output functions.

The terminal equipment 700 may also include at least one sensor 150 such as an optical sensor, a motion sensor and other sensors. The optical sensor may include an environment optical sensor and an approaching sensor, wherein the environment optical sensor may adjust the brightness of the display panel 141 according to the brightness of the environment light, and the approaching sensor may turn off the display panel 141 and/or the backlight when the terminal equipment 700 moves to near the ear. As one kind of the motion sensor, a gravity acceleration sensor may detect magnitudes of acceleration on respective directions (usually on three axes), may detect values and directions of the gravity when in stationary state, and may be configured to recognize applications of the mobile phone attitude (for example, horizontal and vertical screen switching, related games, magnetometer gesture calibration), vibration recognize related functions (for example a pedometer, knocking) and the like. The terminal equipment 700 may also be configured with other sensors such as a gyro, a barometer, a hygrometer, a thermometer, an infrared sensor and the like, which are not described repeatedly.

An audio circuit 160, a loudspeaker 161 and a microphone 162 may provide an audio interface between the user and the terminal equipment 700. The audio circuit 160 may transmit the electrical signal converted from the received audio data to the loudspeaker 161 to be converted into sound signal output. On the other hand, the microphone 162 converts the collected sound signals into electrical signals, the audio circuit 160 receives the electrical signals and then converts them into audio data, then outputs the audio data to the processor 180 to be processed, then transmits the audio data to for example another electronic equipment thought the RF circuit 110, or outputs the audio data to the storage 120 so as to be further processed. The audio circuit 160 may also include an ear jack to provide communication between an external earphone and the terminal equipment 700.

In order to achieve wireless communication, the electronic equipment may be configured with a wireless communication unit 170 thereon. The wireless communication unit 170 may be a WIFI module. WIFI belongs to short-range wireless transmission technology. The terminal equipment 700 may help the user transmitting or receiving E-mail, browsing web pages and accessing streaming media and the like through the wireless communication unit 170, which provides the user wireless broadband internet access. Although the wireless communication unit 170 is shown in Fig. 5, it should be understood that, it does not belong to the necessary composition of the terminal equipment 700, and may be omitted according to requirements within the scope without changing the substance of the present disclosure.

The processor 180 is a control center of the terminal equipment 700 using various interfaces and wires to connect respective portions of the whole mobile phone. By operating or executing software programs and/or modules stored in the storage 120, invoking data stored in the storage 120, and executing various functions of the terminal equipment 700 and processing data, the processor 180 proceeds overall monitoring to the mobile phone. Alternatively, the processor 180 may include one or more processing cores. Preferably, the processor 180 may integrate application processors and modem processors, wherein the application processors mainly process the operating systems, the user interfaces, the application programs and the like, and the modem processors mainly process wireless communications. It should be understood that, the above modem processors may be not integrated into the processor 180.

The terminal equipment 700 further includes a power supply 190 (for example, a battery) to supply power to respective parts. Preferably, the power supply may be logically connected with the processor 180 through a power supply management system, thereby realizing functions of managing charging or discharging through the power supply management system, and managing the power consuming and the like. The power supply 190 may also include arbitrary components such as one or more DC or AC power supplies, a rechargeable system, a power supply malfunction detecting circuit, a power supply converter or an inverter, a power supply state indicator and the like.

Although not shown, the terminal equipment 700 may also include a camera, a Bluetooth module or the like, which is not described repeatedly. In the present embodiment, the display unit of the terminal equipment is a touch screen display, the terminal equipment also includes one or more processors, a memory and one or more modules stored in the storage and configured to be executed by the one or more processors, wherein the one or more modules have following functions:
when determining that a current process request is an installation request of a downloaded application, determining the installation program object carried by an operating system itself as a process program object in response to the installation request; and
starting up the installation program object carried by the operating system itself to install the downloaded application corresponding to the installation request.

Optionally, the step of determining an installation program object carried by the operating system itself as the process program object in response to the installation request includes:
specifying a component name to a component property of the installation request, wherein the component name is a mark of the installation program object carried by the operating system itself;
obtaining a process program list in the operating system corresponding to the installation request; and
looking up in the process program list the mark of the installation program object carried by the operating system itself, and obtaining the corresponding installation program object carried by the operating system itself as a process program object in response to the installation request.

Optionally, the step of determining the installation program object carried by an operating system itself as a process program object in response to the installation request includes:
obtaining a process program list in the operating system corresponding to the installation request, wherein the process program list consists of one installation program object carried by the operating system itself; and
obtaining the installation program object carried by the operating system itself as a process program object in response to the installation request.

Optionally, the step of determining the current process request as the installation request of the downloaded application includes:
obtaining property information of the current process request, wherein the property information includes an action property and a type property; and
if the action property and the type property are respectively consistent with the action property and the type property preset for the installation request of the downloaded application, judging the current process request as the installation request of the downloaded application.

Optionally, a chooseBestActivity method is applied to obtain the property information of the current process request.

Respective embodiments of the present descriptions are described in a progressive manner, in which each embodiment is described by focusing on those differences from the other embodiments, while those like or similar parts among the embodiments may be referred to each other.

It should be understood for those skilled in the art that, the embodiments of the present disclosure may be provided as methods, systems, or computer program products. In this way, the present disclosure may be in the form of hardware-only embodiments, software-only embodiments, or embodiments in combination of software and hardware. Moreover, the present disclosure may be in the form of computer program products to be carried on one or more computer usable storage media (comprising but not limited to magnetic disc memories, CD-ROMs, optical memories and the like) including computer usable program codes therein.

The present disclosure is described with reference to the flow charts and/or block diagrams of the method, the mobile device (system), and the computer program products according to the embodiments of the present disclosure. It should be understood that the computer program instructions may be used to implement each flow process and/or each block in the flow charts and/or block diagrams, and the combinations of the flow process and/or block in the flow charts and/or block diagrams. The computer program instructions may be provided to a general-purpose computer, a dedicated computer, an embedded processor or processors of other programmable data process device to produce a machine, so that by enabling the computers or the processors of other programmable data process device to execute the instructions a device that has the functions prescribed by one or more procedures in the flow charts and/or one or more blocks in the block diagrams can be produced.

Those computer program instructions may also be stored in a computer readable memory that is able to guide the computer or other programmable data process device to work in such a specific way that the instructions stored in the computer readable memory may produce a manufacture including an instructing device for achieving the functions prescribed by one or more procedures in the flow charts and/or one or more blocks in the block diagrams.

Those computer program instructions may also be loaded in a computer or other programmable data process mobile device, so that the computer or other programmable mobile device may execute a series of operation steps to produce processes achieved by the computer. Therefore the instructions executed on the computers or other programmable mobile device can provide steps for achieving the functions prescribed by one or more procedures in the flow charts and/or one or more blocks in the block diagrams.

Finally, it should be further noted that, the terms such as "comprise", "include" or any other varieties intend to cover a non-exclusive inclusion, so that a process, a method, a product, or a mobile device comprising a series of elements not only comprise those elements but also other elements not explicitly enumerated, or even those elements inherently contained in the process, the method, the product, or the mobile terminal. An element defined by a sentence like "comprising one/a..." may not exclude an existence of other similar elements in the process, the method, the product, or the mobile terminal comprising the elements, unless otherwise further limited.

A method, a device and an equipment for installing application provided in the embodiments of the present disclosure are introduced in detail as above. Some specific cases are used to illustrate the principle and implementation modes of the embodiments according to the present disclosure, and description of the embodiments as above is only for purpose of facilitating the understanding of the methods and core concepts thereof. In addition, for those skilled in the art, modifications will be made in the specific implementation modes and the application range according to the concepts of the embodiments of the present disclosure. To sum up, the disclosure of the present descriptions should not be interpreted as limitation to the embodiments of the present disclosure.

## Claims

1. A method for installing applications and for preventing a malicious installation program object from intercepting a user when installing an application that has been downloaded, **characterized in that** the method comprises steps of:
determining (101, 201, 301) if a current process request is a request for installation of a downloaded application, including obtaining (203) a process program list in the operating system corresponding to the installation request, the process program list storing one or more process program objects having installation ability;
determining if an installation program object associated with the application is a default installation program object carried by the operating system itself or is a third party installation program object;
if it is determined that the installation program object associated with the application is a third party installation program object, when receiving a request for registration of the installation program object to the operating system to be added to the process program list, except the request for registration from the default installation program object of the operating system, ignoring all other requests for registration from third party installation program objects, so that the process program list only includes one installation program object carried by the operating system itself; and
starting up (102, 205, 304) the installation program object carried by the operating system itself to install the downloaded application corresponding to the installation request.

2. The method according to claim 1, wherein the step of determining (101) if an installation program object associated with the application is a default installation program object carried by the operating system itself or is a third party installation program object, comprises:
specifying (202) a component name to a component property of the installation request, wherein the component name is a mark of the installation program object carried by the operating system itself;
obtaining (203) the process program list in the operating system corresponding to the installation request; and
looking up (204) in the process program list the mark of the installation program object carried by the operating system itself, and obtaining the corresponding installation program object carried by the operating system itself as a process program object in response to the installation request.

3. The method according to claim 1, wherein the step of determining (301) if an installation program object associated with the application is a default installation program object carried by the operating system itself or is a third party installation program object, comprises:
obtaining (302) the process program list in the operating system corresponding to the installation request, wherein the process program list consists of one installation program object carried by the operating system itself; and
obtaining (303) the installation program object carried by the operating system itself as a process program object in response to the installation request.

4. The method according to any one of claims 1 to 3, wherein the step of determining in response to the installation request that a current process request is an installation request of a downloaded application, comprises:
obtaining property information of the current process request, wherein the property information comprises an action property and a type property; and
if the action property and the type property are respectively consistent with an action property and a type property preset for the installation request of the downloaded application, judging the current process request as the installation request of the downloaded application.

5. A device for installing applications, **characterized in that** the device comprises:
one or more processors (180);
a memory (120); and
one or more modules stored in storage and configured to be executed by the one or more processors, wherein the one or more modules comprise modules for:
determining (101, 201, 301) if a current process request is a request for installation of a downloaded application, including obtaining (203) a process program list in the operating system corresponding to the installation request, the process program list storing one or more process program objects having installation ability;
determining if an installation program object associated with the application is a default installation program object carried by the operating system itself or is a third party installation program object;
if it is determined that the installation program object associated with the application is a third party installation program object, when receiving a request for registration of the installation program object to the operating system to be added to the process program list, except the request for registration from the default installation program object of the operating system, ignoring all other requests for registration from third party installation program objects, so that the process program list only includes one installation program object carried by the operating system itself; and
starting up (102, 205, 304) the installation program object carried by the operating system itself to install the downloaded application corresponding to the installation request.

6. The device according to claim 5, wherein the module for determining (101) if an installation program object associated with the application is a default installation program object carried by operating system itself or is a third party installation program object, comprises;
a mark adding sub-module (4012) configured to specify a component name to a component property of the installation request, wherein the component name is a mark of the installation program object carried by the operating system itself;
a first list obtaining sub-module (4013) configured to obtain the process program list in the operating system corresponding to the installation request; and
a looking up sub-module (4014) configured to look up in the process program list the mark of the installation program object carried by the operating system itself, and obtain the corresponding installation program object carried by the operating system itself as a process program object in response to the installation request.

7. The device according to claim 5, wherein the module for determining (101) if an installation program object associated with the application is a default installation program object carried by operating system itself or is a third party installation program object, comprises;
a second list obtaining sub-module (4016) configured to obtain a process program list in the operating system corresponding to the installation request, the process program list consists of one installation program object carried by the operating system itself; and
an object obtaining sub-module (4017) configured to obtain the installation program object carried by the operating system itself as a process program object in response to the installation request.

8. The device according to any one of claims 5 to 7, wherein the module for determining in response to the installation request that a current process request is an installation request of a downloaded application comprises:
a property information obtaining sub-module configured to obtain property information of the current process request, wherein the property information comprises an action property and a type property; and
a judging sub-module configured to judge the current process request as the installation request of the downloaded application, when the action property and the type property are respectively consistent with an action property and a type property preset for the installation request of the downloaded application.

9. A computer-readable medium having stored therein instructions that, when executed by one or more processors of a device, cause the device to perform the steps of any one of claims 1 to 4.

10. A computer program which when executing on a processor, performs the method of any one of claims 1 to 4.

## Patentansprüche

1. Verfahren zum Installieren von Anwendungen und zum Verhindern, dass ein bösartiges Installationsprogrammobjekt einen Benutzer beim Installieren einer heruntergeladenen Anwendung abfängt, **dadurch gekennzeichnet, dass** das Verfahren die folgenden Schritte beinhaltet:
Feststellen (101, 201, 301), ob eine aktuelle Prozessanforderung eine Anforderung zum Installieren einer heruntergeladenen Anwendung ist, einschließlich des Einholens (203) einer Prozessprogrammliste im Betriebssystem entsprechend der Installationsanforderung, wobei die Prozessprogrammliste ein oder mehrere Prozessprogrammobjekte mit Installationsfähigkeit speichert;
Feststellen, ob ein mit der Anwendung assoziiertes Installationsprogrammobjekt ein vom Betriebssystem selbst geführtes Vorgabeinstallationsprogrammobjekt oder ein Fremdinstallationsprogrammobj ekt ist;
Ignorieren, wenn festgestellt wird, dass das mit der Anwendung assoziierte Installationsprogrammobjekt ein Fremdinstallationsprogrammobj ekt ist, beim Empfangen einer Anforderung zum Registrieren des Installationsprogrammobjekts beim Betriebssystem zum Hinzufügen zur Prozessprogrammliste, mit Ausnahme der Anforderung zum Registrieren vom Vorgabeinstallationsprogrammobjekt des Betriebssystems, aller anderen Anforderungen zum Registrieren von Fremdinstallationsprogrammobjekten, so dass die Prozessprogrammliste nur ein vom Betriebssystem selbst geführtes Installationsprogrammobjekt beinhaltet; und
Starten (102, 205, 304) des vom Betriebssystem selbst geführten Installationsprogrammobjekts zum Installieren der der Installationsanforderung entsprechenden heruntergeladenen Anwendung.

2. Verfahren nach Anspruch 1, wobei der Schritt des Feststellens (101), ob ein mit der Anwendung assoziiertes Installationsprogrammobjekt ein vom Betriebssystem selbst geführtes Vorgabeinstallationsprogrammobjekt oder ein Fremdinstallationsprogrammobjekt ist, Folgendes beinhaltet:
Spezifizieren (202) eines Komponentennamens für eine Komponenteneigenschaft der Installationsanforderung, wobei der Komponentenname ein Kennzeichen des vom Betriebssystem selbst geführten Installationsprogrammobjekts ist;
Einholen (203) der Prozessprogrammliste im Betriebssystem entsprechend der Installationsanforderung; und
Nachschlagen (204), in der Prozessprogrammliste, des Kennzeichens des vom Betriebssystem selbst geführten Installationsprogrammobjekts und Einholen des vom Betriebssystem selbst geführten entsprechenden Installationsprogrammobjekts als Prozessprogrammobjekt als Reaktion auf die Installationsanforderung.

3. Verfahren nach Anspruch 1, wobei der Schritt des Feststellens (301), ob ein mit der Anwendung assoziiertes Installationsprogrammobjekt ein vom Betriebssystem selbst geführtes Vorgabeinstallationsprogrammobjekt oder ein Fremdinstallationsprogrammobjekt ist, Folgendes beinhaltet:
Einholen (302) der Prozessprogrammliste im Betriebssystem entsprechend der Installationsanforderung, wobei die Prozessprogrammliste aus einem vom Betriebssystem selbst geführten Installationsprogrammobjekt besteht; und
Einholen (303) des vom Betriebssystem selbst geführten Installationsprogrammobjekts als Prozessprogrammobjekt als Reaktion auf die Installationsanforderung.

4. Verfahren nach einem der Ansprüche 1 bis 3, wobei der Schritt des Feststellens als Reaktion auf die Installationsanforderung, dass eine aktuelle Prozessanforderung eine Installationsanforderung einer heruntergeladenen Anwendung ist, Folgendes beinhaltet:
Einholen von Eigenschaftsinformationen der aktuellen Prozessanforderung, wobei die Eigenschaftsinformationen eine Aktionseigenschaft und eine Typeneigenschaft umfassen; und
Beurteilen, wenn die Aktionseigenschaft und die Typeneigenschaft jeweils mit einer Aktionseigenschaft und einer Typeneigenschaft übereinstimmen, die für die Installationsanforderung der heruntergeladenen Anwendung voreingestellt sind, der aktuellen Prozessanforderung als die Installationsanforderung der heruntergeladenen Anwendung.

5. Vorrichtung zum Installieren von Anwendungen, **dadurch gekennzeichnet, dass** die Vorrichtung Folgendes umfasst:
einen oder mehrere Prozessoren (180);
einen Speicher (120); und
ein oder mehrere Module, die im Speicher gespeichert und zum Ausführen durch die ein oder mehreren Prozessoren konfiguriert sind, wobei die ein oder mehreren Module Module umfassen zum:
Feststellen (101, 201, 301), ob eine aktuelle Prozessanforderung eine Anforderung zum Installieren einer heruntergeladenen Anwendung ist, einschließlich des Einholens (203) einer Prozessprogrammliste im Betriebssystem entsprechend der Installationsanforderung, wobei die Prozessprogrammliste ein oder mehrere Prozessprogrammobjekte mit Installationsfähigkeit speichert;
Feststellen, ob ein mit der Anwendung assoziiertes Installationsprogrammobjekt ein vom Betriebssystem selbst geführtes Vorgabeinstallationsprogrammobjekt oder ein Fremdinstallationsprogrammobj ekt ist;
Ignorieren, wenn festgestellt wird, dass das mit der Anwendung assoziierte Installationsprogrammobjekt ein Fremdinstallationsprogrammobj ekt ist, beim Empfangen einer Anforderung zum Registrieren des Installationsprogrammobjekts beim Betriebssystem zum Hinzufügen zur Prozessprogrammliste, mit Ausnahme der Anforderung zum Registrieren vom Vorgabeinstallationsprogrammobjekt des Betriebssystems, aller anderen Anforderungen zum Registrieren von Fremdinstallationsprogrammobjekten, so dass die Prozessprogrammliste nur ein vom Betriebssystem selbst geführtes Installationsprogrammobjekt beinhaltet; und
Starten (102, 205, 304) des vom Betriebssystem selbst geführten Installationsprogrammobjekts zum Installieren der der Installationsanforderung entsprechenden heruntergeladenen Anwendung.

6. Vorrichtung nach Anspruch 5, wobei das Modul zum Feststellen (101), ob ein mit der Anwendung assoziiertes Installationsprogrammobjekt ein vom Betriebssystem selbst geführtes Vorgabeinstallationsobjekt oder ein Fremdinstallationsprogrammobjekt ist, Folgendes umfasst:
ein Kennzeichenhinzufügungssubmodul (4012), konfiguriert zum Spezifizieren eines Komponentennamens für eine Komponenteneigenschaft der Installationsanforderung, wobei der Komponentenname ein Kennzeichen des vom Betriebssystem selbst geführten Installationsprogrammobjekts ist;
ein erstes Listeneinholungssubmodul (4013), konfiguriert zum Einholen der Prozessprogrammliste im Betriebssystem entsprechend der Installationsanforderung; und
ein Nachschlagsubmodul (4014), konfiguriert zum Nachschlagen, in der Prozessprogrammliste, des Kennzeichens des vom Betriebssystem selbst geführten Installationsprogrammobjekts und Einholen des entsprechenden vom Betriebssystem selbst geführten Installationsprogrammobjekts als Prozessprogrammobjekt als Reaktion auf die Installationsanforderung.

7. Vorrichtung nach Anspruch 5, wobei das Modul zum Feststellen (101), ob ein mit der Anwendung assoziiertes Installationsprogrammobjekt ein vom Betriebssystem selbst geführtes Vorgabeinstallationsprogrammobjekt oder ein Fremdinstallationsprogrammobjekt ist, Folgendes umfasst:
ein zweites Listeneinholungssubmodul (4016), konfiguriert zum Einholen einer Prozessprogrammliste in dem Betriebssystem entsprechend der Installationsanforderung, wobei die Prozessprogrammliste aus einem vom Betriebssystem selbst geführten Installationsprogrammobjekt besteht; und
ein Objekteinholungssubmodul (4017), konfiguriert zum Einholen des vom Betriebssystem selbst geführten Installationsprogrammobjekts als Prozessprogrammobjekt als Reaktion auf die Installationsanforderung.

8. Vorrichtung nach einem der Ansprüche 5 bis 7, wobei das Modul zum Feststellen, als Reaktion auf die Installationsanforderung, dass eine aktuelle Prozessanforderung eine Installationsanforderung einer heruntergeladenen Anwendung ist, Folgendes umfasst:
ein Eigenschaftsinformationseinholungssubmodul, konfiguriert zum Einholen von Eigenschaftsinformationen der aktuellen Prozessanforderung, wobei die Eigenschaftsinformationen eine Aktionseigenschaft und eine Typeneigenschaft umfassen; und
ein Beurteilungssubmodul, konfiguriert zum Beurteilen der aktuellen Prozessanforderung als Installationsanforderung der heruntergeladenen Anwendung, wenn die Aktionseigenschaft und die Typeneigenschaft jeweils mit einer Aktionseigenschaft und einer Typeneigenschaft übereinstimmen, die für die Installationsanforderung der heruntergeladenen Anwendung voreingestellt wurden.

9. Computerlesbares Medium, auf dem Befehle gespeichert sind, die bei Ausführung durch einen oder mehrere Prozessoren einer Vorrichtung bewirken, dass die Vorrichtung die Schritte nach einem der Ansprüche 1 bis 4 ausführt.

10. Computerprogramm, das bei Ausführung auf einem Prozessor das Verfahren nach einem der Ansprüche 1 bis 4 ausführt.

## Revendications

1. Un procédé d'installation d'applications et d'empêchement d'un objet de programme d'installation malveillant d'intercepter un utilisateur lors de l'installation d'une application qui a été téléchargée, **caractérisé en ce que** le procédé comprend les opérations suivantes :
la détermination (101, 201, 301) si une demande de traitement courante est une demande d'installation d'une application téléchargée, comprenant l'obtention (203) d'une liste de programmes de traitement dans le système d'exploitation correspondant à la demande d'installation, la liste de programmes de traitement conservant en mémoire un ou plusieurs objets de programme de traitement possédant une capacité d'installation,
la détermination si un objet de programme d'installation associé à l'application est un objet de programme d'installation par défaut transporté par le système d'exploitation proprement dit ou est un objet de programme d'installation d'entreprise tierce,
s'il est déterminé que l'objet de programme d'installation associé à l'application est un objet de programme d'installation d'entreprise tierce, lors de la réception d'une demande d'enregistrement de l'objet de programme d'installation auprès du système d'exploitation à ajouter à la liste de programmes de traitement, à l'exception de la demande d'enregistrement provenant de l'objet de programme d'installation par défaut du système d'exploitation,
l'ignorance de toutes les autres demandes d'enregistrement provenant d'objets de programme d'installation d'entreprise tierce, de sorte que la liste de programmes de traitement contienne uniquement un objet de programme d'installation transporté par le système d'exploitation proprement dit, et
le démarrage (102, 205, 304) de l'objet de programme d'installation transporté par le système d'exploitation proprement dit de façon à installer l'application téléchargée correspondant à la demande d'installation.

2. Le procédé selon la Revendication 1, où l'opération de détermination (101) si un objet de programme d'installation associé à l'application est un objet de programme d'installation par défaut transporté par le système d'exploitation proprement dit ou est un objet de programme d'installation d'entreprise tierce, comprend :
la spécification (202) d'un nom de composant pour une propriété de composant de la demande d'installation, où le nom de composant est une marque de l'objet de programme d'installation transporté par le système d'exploitation proprement dit,
l'obtention (203) de la liste de programmes de traitement dans le système d'exploitation correspondant à la demande d'installation, et
la consultation (204) de la liste de programmes de traitement à la recherche de la marque de l'objet de programme d'installation transporté par le système d'exploitation proprement dit, et l'obtention de l'objet de programme d'installation correspondant transporté par le système d'exploitation proprement dit sous la forme d'un objet de programme de traitement en réponse à la demande d'installation.

3. Le procédé selon la Revendication 1, où l'opération de détermination (301) si un objet de programme d'installation associé à l'application est un objet de programme d'installation par défaut transporté par le système d'exploitation proprement dit ou est un objet de programme d'installation d'entreprise tierce, comprend :
l'obtention (302) de la liste de programmes de traitement dans le système d'exploitation correspondant à la demande d'installation, où la liste de programmes de traitement se compose d'un objet de programme d'installation transporté par le système d'exploitation proprement dit, et
l'obtention (303) de l'objet de programme d'installation transporté par le système d'exploitation proprement dit sous la forme d'un objet de programme de traitement en réponse à la demande d'installation.

4. Le procédé selon l'une quelconque des Revendications 1 à 3, où l'opération de détermination, en réponse à la demande d'installation, qu'une demande de traitement courante est une demande d'installation d'une application téléchargée, comprend :
l'obtention d'informations de propriété relatives à la demande de traitement courante, où les informations de propriété comprennent une propriété d'action et une propriété de type, et
si la propriété d'action et la propriété de type sont respectivement cohérentes avec une propriété d'action et une propriété de type prédéfinies pour la demande d'installation de l'application téléchargée, la considération de la demande de traitement courante en tant que demande d'installation de l'application téléchargée.

5. Un dispositif d'installation d'applications, **caractérisé en ce que** le dispositif comprend :
un ou plusieurs processeurs (180),
une mémoire (120), et
un ou plusieurs modules conservés en mémoire dans un espace mémoire et configurés de façon à être exécutés par les un ou plusieurs processeurs, où les un ou plusieurs modules comprennent des modules destinés à :
la détermination (101, 201, 301) si une demande de traitement courante est une demande d'installation d'une application téléchargée, comprenant l'obtention (203) d'une liste de programmes de traitement dans le système d'exploitation correspondant à la demande d'installation, la liste de programmes de traitement conservant en mémoire un ou plusieurs objets de programme de traitement possédant une capacité d'installation,
la détermination si un objet de programme d'installation associé à l'application est un objet de programme d'installation par défaut transporté par le système d'exploitation proprement dit ou est un objet de programme d'installation d'entreprise tierce,
s'il est déterminé que l'objet de programme d'installation associé à l'application est un objet de programme d'installation d'entreprise tierce, lors de la réception d'une demande d'enregistrement de l'objet de programme d'installation auprès du système d'exploitation à ajouter à la liste de programmes de traitement, à l'exception de la demande d'enregistrement, à partir de l'objet de programme d'installation par défaut du système d'exploitation,
l'ignorance de toutes les autres demandes d'enregistrement provenant d'objets de programme d'installation d'entreprise tierce de sorte que la liste de programmes de traitement contienne uniquement un objet de programme d'installation transporté par le système d'exploitation proprement dit, et
le démarrage (102, 205, 304) de l'objet de programme d'installation transporté par le système d'exploitation proprement dit de façon à installer l'application téléchargée correspondant à la demande d'installation.

6. Le dispositif selon la Revendication 5, où le module de détermination (101) si un objet de programme d'installation associé à l'application est un objet de programme d'installation par défaut transporté par le système d'exploitation proprement dit ou est un objet de programme d'installation d'entreprise tierce, comprend :
un sous-module d'ajout de marque (4012) configuré de façon à spécifier un nom de composant pour une propriété de composant de la demande d'installation, où le nom de composant est une marque de l'objet de programme d'installation transporté par le système d'exploitation proprement dit,
un premier sous-module d'obtention de liste (4013) configuré de façon à obtenir la liste de programmes de traitement dans le système d'exploitation correspondant à la demande d'installation, et
un sous-module de consultation (4014) configuré de façon à consulter la liste de programmes de traitement à la recherche de la marque de l'objet de programme d'installation transporté par le système d'exploitation proprement dit, et à obtenir l'objet de programme d'installation correspondant transporté par le système d'exploitation proprement dit sous la forme d'un objet de programme de traitement en réponse à la demande d'installation.

7. Le dispositif selon la Revendication 5, où le module de détermination (101) si un objet de programme d'installation associé à l'application est un objet de programme d'installation par défaut transporté par le système d'exploitation proprement dit ou est un objet de programme d'installation d'entreprise tierce, comprend :
un deuxième sous-module d'obtention de liste (4016) configuré de façon à obtenir une liste de programmes de traitement dans le système d'exploitation correspondant à la demande d'installation, la liste de programmes de traitement se composant d'un objet de programme d'installation transporté par le système d'exploitation proprement dit, et
un sous-module d'obtention d'objet (4017) configuré de façon à obtenir l'objet de programme d'installation transporté par le système d'exploitation proprement dit sous la forme d'un objet de programme de traitement en réponse à la demande d'installation.

8. Le dispositif selon l'une quelconque des Revendications 5 à 7, où le module de détermination, en réponse à la demande d'installation, qu'une demande de traitement courante est une demande d'installation d'une application téléchargée comprend :
un sous-module d'obtention d'informations de propriété configuré de façon à obtenir des informations de propriété relatives à la demande de traitement courante, où les informations de propriété comprennent une propriété d'action et une propriété de type, et
un sous-module de considération configuré de façon à considérer la demande de traitement courante en tant que demande d'installation de l'application téléchargée, lorsque la propriété d'action et la propriété de type sont respectivement cohérentes avec une propriété d'action et une propriété de type prédéfinies pour la demande d'installation de l'application téléchargée.

9. Un support lisible par ordinateur possédant conservées en mémoire sur celui-ci des instructions qui, lorsqu'elles sont exécutées par un ou plusieurs processeurs d'un dispositif, amènent le dispositif à exécuter les opérations selon l'une quelconque des Revendications 1 à 4.

10. Un programme informatique qui, lorsqu'il est exécuté sur un processeur, exécute le procédé selon l'une quelconque des Revendications 1 à 4.
